# EUROPEAN PATENT APPLICATION

(11) **EP 4 586 042 A1**
(43) Date of publication of application: **16.07.2025**
(21) Application number: 24219008.0
(22) Date of filing: 11.12.2024
(51) Int. Cl.: G05D 1/242, G05D 1/246, G05D 1/248, G05D 105/15, G05D 107/20, G05D 109/10

(54) **IMPROVED DETERMINATION OF POSITION FOR A ROBOTIC WORK TOOL**

(30) Priority: 10.01.2024 SE 2450014
(71) Applicant: Husqvarna AB, 561 82 Huskvarna (SE)
(72) Inventor: Bergström, Stefan, Huskvarna (SE); Björling, Elsa, Huskvarna (SE); Liljedahl, Marcus, Huskvarna (SE)

(57) **Abstract**

A robotic work tool system (200) comprising a robotic work tool (100) arranged to operate in an operational area (205), and the robotic work tool (100) comprising a controller (110), a memory (120), a satellite navigation sensor (175) and one or more additional navigation sensors (180), and wherein the memory is configured to store a map of the operational are, said map application including a list of features, and wherein the controller (110) is configured to receive (510) sensor input from the satellite navigation sensor (175), the sensor input indicating a satellite position for the robotic work tool (100), determine (520) if the satellite position is a reliably determined, and if not so, determine a current position of the robotic work tool (100) by receiving sensor readings from the distance sensor (180), finding a matching feature in the list of features, the matching feature having a stored position, determine a distance to the feature and determining the current position based on the position of the matching feature and a distance to the feature.

## Description

### TECHNICAL FIELD

This application relates to a robotic work tool, such as a lawnmower, and a method for providing an improved determination of a position for the robotic work tool, and in particular to a robotic work tool, such as a lawnmower, and a method for providing an improved determination of a position for the robotic work tool utilizing sensor navigation as an alternative or supplement to satellite navigation.

### BACKGROUND

Automated or robotic work tools such as robotic lawnmowers are becoming increasingly more popular and so is the use of the robotic work tool in various types of operational areas.

Operating requirements, in particular for robotic work tools being robotic lawnmowers, often include requirements both relating to safety (such as staying inside boundaries) and requirements to perform (advanced) patterns and also to take into account local features (such as flowerbeds). Utilizing navigation techniques relying on satellite navigation will enable for all such requirements to be used, as long as the satellite position is trusted (can be determined reliably. When satellite reception is not trusted, many contemporary robotic work tools rely on alternative or supplemental navigation techniques, such as visual navigation, deduced navigation or other sensor-based navigation. However, all such navigation techniques suffer from various drawbacks, all resulting in that the position determined is not always accurately determined.

Thus, there is a need for an improved manner of providing advanced navigational functionality utilizing sensor-based based navigation as an alternative to satellite navigation.

### SUMMARY

It is therefore an object of the teachings of this application to overcome or at least reduce those problems by providing a robotic work tool system comprising a robotic work tool arranged to operate in an operational area, and the robotic work tool comprising a controller, a memory, a satellite navigation sensor and one or more additional navigation sensors, and wherein the memory is configured to store a map of the operational are, said map application including a list of features, and wherein the controller is configured to receive sensor input from the satellite navigation sensor, the sensor input indicating a satellite position for the robotic work tool, determine if the satellite position is a reliably determined, and if not so, determine a current position of the robotic work tool by receiving sensor readings from the distance sensor, finding a matching feature in the list of features, the matching feature having a stored position, determine a distance to the feature and determining the current position based on the position of the matching feature and a distance to the feature.

In some embodiments the robotic work tool system is as per the appended claims.

In some embodiments the robotic work tool is a robotic lawnmower.

It is also an object of the teachings of this application to overcome the problems by providing a method for use in a robotic work tool system comprising a robotic work tool arranged to operate in an operational area, and the robotic work tool comprising a satellite navigation sensor and one or more additional navigation sensors, and wherein the memory is configured to store a map of the operational are, said map application including a list of features, and wherein the method comprises receiving sensor input from the satellite navigation sensor, the sensor input indicating a satellite position for the robotic work tool, determining if the satellite position is a reliably determined, and if not so, determining a current position of the robotic work tool by receiving sensor readings from the distance sensor, finding a matching feature in the list of features, the matching feature having a stored position, determining a distance to the feature and determining the current position based on the position of the matching feature and a distance to the feature.

It is also an object of the teachings of this application to overcome the problems by providing a computer-readable medium carrying computer instructions that when loaded into and executed by a controller of a robotic work tool enables the robotic work tool to implement the method according to herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system according to some example embodiments of the teachings herein;
Figure 3 shows a schematic view of a sensor array of a robotic work tool system according to some example embodiments of the teachings herein;
Figure 4A shows a schematic view of a sensor array of a robotic work tool system according to some example embodiments of the teachings herein;
Figure 4B shows a schematic view of a sensor array of a robotic work tool system according to some example embodiments of the teachings herein;
Figure 4C shows a schematic view of a sensor array of a robotic work tool system according to some example embodiments of the teachings herein;
Figure 4D shows a schematic view of a sensor array of a robotic work tool system according to some example embodiments of the teachings herein;
Figure 5 shows a corresponding flowchart for a method according to some example embodiments of the teachings herein; and
Figure 6 shows a schematic view of a computer-readable medium carrying computer instructions that when loaded into and executed by a controller of a robotic work tool, enables the robotic work tool to implement the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

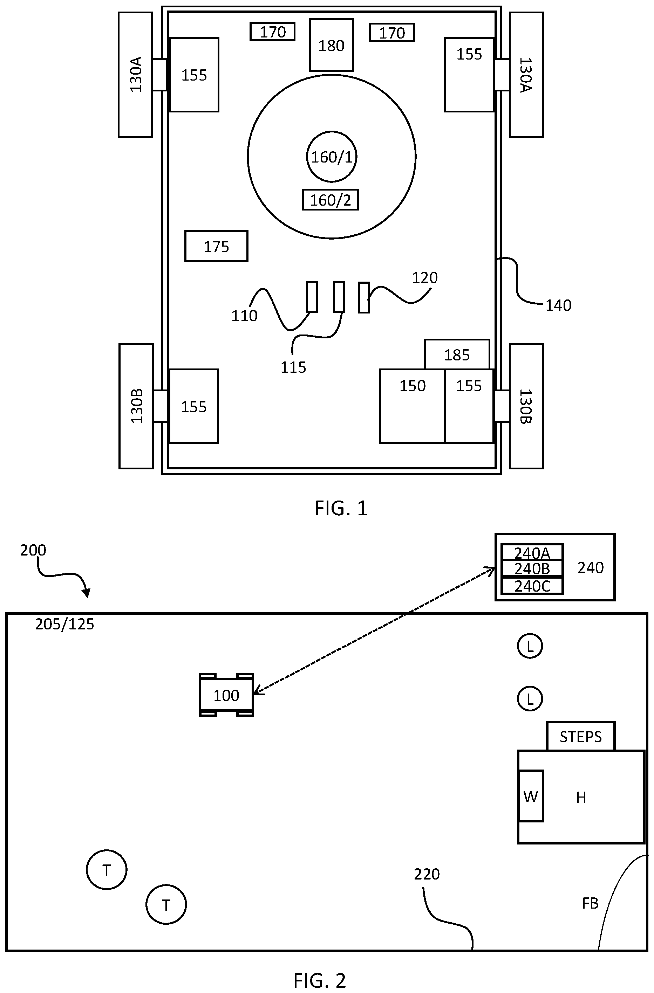

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

In some embodiments, and as will be discussed below, the robotic work tool is a semi-controlled or at least supervised autonomous work tool, such as farming equipment or large lawnmowers (for example riders). In some embodiments the robotic work tool comprises tractors being autonomously controlled.

It should also be noted that the robotic work tool is a self-propelled robotic work tool, capable of autonomous navigation within an operational area, where the robotic work tool propels itself across or around the operational area in a pattern (random or predetermined).

The robotic work tool 100, exemplified as a robotic lawnmower 100, has a main body part 140, possibly comprising a chassis 140 and an outer shell, and a plurality of wheels 130 (in this example four wheels 130, but other number of wheels are also possible, such as three or six). The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

In some embodiments, the robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.1 1b), Global System Mobile (GSM) and LTE (Long Term Evolution), to name a few. The robotic lawnmower 100 may be arranged to communicate with a user equipment for providing information regarding status, location, and progress of operation to the user equipment as well as receiving commands or settings from the user equipment. Alternatively or additionally, the robotic lawnmower 100 may be arranged to communicate with a server for providing information regarding status, location, and progress of operation as well as receiving commands or settings. The robotic lawnmower 100 may - in some embodiments - especially be configured for transmitting sensor readings of features and receiving positional data for features.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a (electromagnetic) boundary (not shown explicitly in figure 2 but deemed to be included in the boundary 220) enclosing an operational area (referenced 205 in figure 2).

The robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic work tool to operate in an operational area bounded by a virtual border (not shown explicitly in figure 2 but deemed to be included in the boundary 220).

The satellite navigation sensor is configured to provide a position, hereafter a satellite position. Depending on positions of the satellites relative the robotic work tool 100 and environmental factors in or close to the work area, the accuracy of the position determined through satellite navigation sensor 175 may vary. In the field of satellite navigation, and herein, a reliably received or determined position is a position for which the accuracy exceeds a threshold. The accuracy may be determined based on the number of satellites signals received. The accuracy may alternative or additionally be determined as a variance in time, where a great variance or fluctuation indicates an inaccurate position. It should be noted that "reliably received" - however worded - is a recognized situation in satellite navigation and needs no further explanation.

The robotic lawnmower 100 also comprises additional position sensors 180. These additional position sensors are configured to determine a distance to a feature, and possibly to determine (through an internal controller or as part of the controller 110 of the robotic work tool 100) a position of the robotic work tool 100 based on the distance. These features will hereafter be referred to as distance sensors.

In some embodiments the distance sensors 180 comprises visual sensors arranged to determine a distance to a feature.

In some embodiments the distance sensors 180 comprises radar sensors arranged to determine a distance to a feature.

In some embodiments the distance sensors 180 comprises lidar sensors arranged to determine a distance to a feature.

In some embodiments robotic lawnmower 100 also comprises deduced reckoning sensors 185. The deduced reckoning sensors 185 may be odometers, accelerometers, and/or an Inertial Measurement Unit (IMU) sensor or other deduced reckoning sensors. In some embodiments these additional sensors 180 comprises a visual odometery sensor, possibly comprised in or connected to the deduced reckoning sensors 185. In some embodiments, the visual odometry sensor is a camera or other image sensor, allowing for image processing to be used to perform a position determination as is known in the field of robot navigation. In some embodiments, the navigation is based on SLAM, and in some embodiments, where a visual odometry sensor (such as a camera) 180A is utilized, the navigation is based on V-SLAM.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The satellite navigation sensor 175, the deduced reckoning sensor 185, as well as the additional sensors 180, alone or in any combination, enables the robot to operate according to a map of the operational area, such as the map stored in the memory 120. As mentioned, the robotic lawnmower 100 is (in some embodiments) arranged to operate according to a map application (indicated in figure 2 and referenced 125) representing one or more operational areas (and possibly the surroundings of the operational area(s)) as well as features of the operational area(s) stored in the memory 120 of the robotic lawnmower 100. In some embodiments, the map application also includes one or more transport areas. In some embodiments, the map application, or simply the map 125, may be generated or supplemented as the robotic lawnmower 100 operates or otherwise moves around in the operational area. In some embodiments, the map application is downloaded, possibly from a server 240. In some embodiments, the map 125, is generated or supplemented by robotic lawnmower 100 processing the sensor readings, identifies features, and stores data on these features. In some embodiments, the map 125, is generated or supplemented by the robotic lawnmower 100 uploading sensor readings to the server, which processes the sensor readings, identifies features, stores data on these features and forwards these stored data on the identified features to the robotic work tool 100.

The server 240 comprises a communication interface 240A, a controller 240B and a memory 240B, which operate in a manner similar to that of the controller 110, communication interface 115 and memory 120 discussed above as a skilled person would understand.

It should be understood that in some embodiments, processing is performed locally in the controller 110 of the robotic work tool 100, in some embodiments, processing is performed remotely in the controller 240B of the server 240, and in some embodiments, processing is performed partially locally in the controller 110 of the robotic work tool 100 and performed partially remotely in the controller 240B of the server 240.

In some embodiments the robotic work tool is arranged or configured to traverse and operate in operational areas, such as gardens, that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in an operational area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in an operational area that contains obstacles that are overhanging, i.e. obstacles that may not be detectable from the ground up, such as low hanging branches of trees or bushes. Such an operational area is thus not simply a flat lawn to be mowed or similar, but an operational area of unpredictable structure and characteristics. The operational area exemplified with referenced to figure 2, may thus be such a non-uniform operational area as disclosed in this paragraph that the robotic work tool is arranged to traverse and/or operate in.

Figure 2 shows a robotic work tool system 200 in some embodiments. The schematic view is not to scale. The robotic work tool system 200 comprises one or more robotic work tools 100 according to the teachings herein arranged to operate in one or more operational areas 205 bounded by a (virtual or other) boundary 220. It should be noted that the operational area 205 shown in figure 2 is simplified for illustrative purposes. The view of the operational area 205 is also intended to be an illustration or graphical representation of the map application 125 discussed in the above. The boundary may be a virtual boundary based on the map application 125, as discussed in the above. The virtual boundary may in some embodiments be supplemented by an electromagnetic boundary.

As with figure 1, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within an operational area.

As is shown in figure 2 there may be obstacles also referred to as features such as houses (referenced H), structures, flowerbeds (referenced FB), trees (referenced T) and lamps (L) to mention a few examples in the operational area 205. As noted above

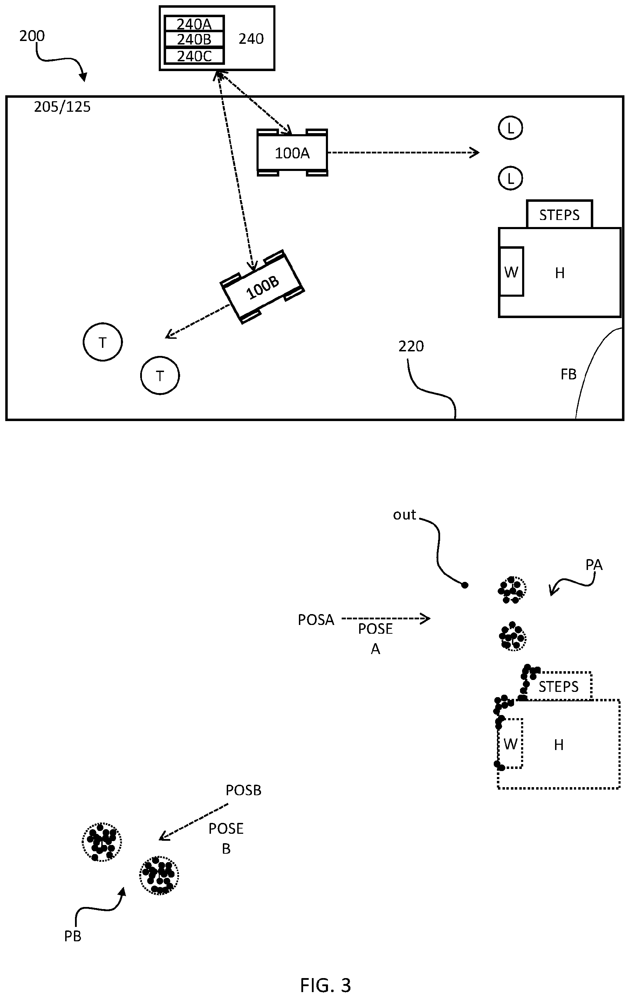

Figure 3 shows a schematic view of a robotic work tool system 200 as in figure 2, where in the upper portion it is shown how a first robotic work tool 100A receives sensor input via its distance sensor 180 and how a second robotic work tool 100B receives sensor input via its distance sensor 180. It should be noted that the second robotic work tool 100B may be the first robotic work tool 100A at a second position. In figure 3, the first robotic work tool 100A is able to "see" or sense distances to the lamps L, the steps (STEPS) and some features of the house (H) such as a corner of the house and the frames of a window (W) in the house. Similarly, the second robotic work tool 100B is able to "see" or sense distances to the trees (T).

It should be noted that the pose, i.e. the direction that the robotic work tool 100 is facing, is noted as the dotted arrow in figure 3.

As noted above, the robotic work tool 100 is, in some embodiments, configured to process the sensor readings internally in the controller 110 (or in a controller of the distance sensor 180, considered to be part of the controller 110), to identify features in the sensor readings and extract data regarding these features. Alternatively or additionally, the robotic work tool 100 is configured to process the sensor readings externally in the server 240, by transmitting the sensor readings to the server and then receiving extracted data regarding features identified in the sensor readings.

The lower portion of figure 3 shows how point clouds are generated based on the sensor readings. In the example of figure 3, a first point cloud PA is generated for the sensor readings received by the first robotic work tool 100A and a second point cloud PB is generated for the sensor readings received by the second robotic work tool 100B.

As can be seen, some points are grouped, and these groups or clusters of points may thus indicate a feature, and based on determining such clusters, features can be identified in the point cloud. In some embodiments, each cluster is replaced by a single point indicting the cluster or feature. The point cloud can thus be severely reduced.

As is also indicated some outlayers (out) are discarded as not being part of any cluster. This can further reduce the point cloud.

The identified features are in some embodiments stored in a list of features. The extracted data will thus also be referred to as the stored data, and they are taken to reference the same data.

The data extracted for each feature includes the position (such as X, Y - or other - coordinates) and the pose of the robotic work tool 100 when receiving the sensor readings. The pose includes the heading of the robotic work tool 100. In some embodiments, the pose also includes the position of the robotic work tool 100.

In some embodiments, the data extracted for each feature also includes a distance to the feature. In some embodiments, the distance is determined based on the position of the feature and the position of the robotic work tool 100. In some embodiments, the position of the feature is determined based on a sensed distance to the feature and the position of the robotic work tool 100. In some embodiments, both are stored.

In some embodiments, the data extracted for each feature also includes a direction (angle - for example measured from the heading) to the feature. Such a direction may be given in the sensor readings.

In some embodiments, the data extracted for each feature also includes a first (or start) position where the feature was observed, and/or a last (or end) position where the feature was observed.

In some embodiments, the data extracted for each feature also includes a path travelled when observing the feature. In some such embodiments, the data also includes the change in heading during the path. And, in some such embodiments, the extracted data includes position, how the direction and the distance to the feature changed during the path.

The features and the extracted data are stored in a list as mentioned above. The features from point cloud A are thus stored in a feature list A, FLA, and the features from point cloud B are stored in a feature list B, FLB. The list may be stored locally in the memory 120 of the robotic work tool 100, or remotely, in a memory 240C of the server 240, and then be retrieved as needed (possibly filtered).

As is illustrated - through an example - in figure 3, the features that are visible from a given position (POSA, POSB) and in a given direction (POSE A, POSE B) can thus be retrieved from the list, and by filtering (or reducing) the list in a given situation based on what features are visible, which can be filtered based on the position (POSA, POSB) and the heading (POSE A, POSE B), a greatly reduced list of features is provided for determining a position, which greatly reduces the computational power needed to analyze all extracted data, such as navigating or determining position relative a point cloud.

This also allows the robotic work tool 100 to generate or supplement a map of the operational area 125 when traversing the area. The map may be generated or supplemented over time, and in some embodiments, the sensor readings are only processed to generate or supplement the map when the satellite position is reliably received, as otherwise the unreliable determination of the position and possibly also the heading will contaminate the list of features.

In the following more details will be given as to how the sensor readings are processed in order to identify the features and extract data. It should be noted that the features are referred to both as a collection of localization points and as individual localization points in the below.

As the robotic work tool 100 is moving with a known position from the satellite navigation system the distance sensor 180, for example the RADAR, continuously do measurements producing sensor readings. A single radar measurement consists of a point cloud normally with about 50-100 points depending on the radar sensitivity and of course the surrounding environment (different objects like trees, grass, structures). Each radar point includes an x and y location and also a signal level (how strong the radar reflection is). Since the robotic work tool 100is equipped with a satellite system, such as RTK system, each radar point can be mapped into a global position. A complete RADAR measurement (radar point cloud) is taken every 100 ms. The Radar looks ahead about 10 m with a FOV of +/- 60 Deg

The radar points in a point cloud are very noisy and also includes picked-up reflections from grass, (house) walls and other objects somewhat randomly. Also, radar reflections from an object can appear differently depending on the approaching angle towards it. From some angles an object might not be visible and from others it appears in a slightly different location. It can therefore be difficult to know what the radar is detecting from the position where the robotic work tool 100 is located.

To handle this problem an algorithm was implemented that tries to identify objects from different locations and approaching angles. An object must also be identified over time to be of any value. This means that when approaching the object, it should be identified in the same location for several measurements otherwise it is not useful for navigation. In the below a basic principle is discussed.

For each radar point in a radar measurement, calculate its global position. Then compare with previously stored localization points if there is a match. There is a match if a radar point is located in same position +/- 5 cm as an existing localization point.

If there is a match, a counter of that localization point is increased so that it can be determined how often the feature is used for localization in navigation.

If there is no match, then create a new localization point (possibly as a feature) and store the location and heading of the robotic work tool 100 since this was the first time it was seen.

Then the robotic work tool 100 checks all existing (i.e. stored) localization points. If a localization point has not been seen for several measurement, it is deleted.

But, if the localization point has been observed previously, for example for several measurements (> 10), this localization point could be useful and is therefore stored together with the position of the robotic work tool 100 where it was (last) observed.

If the localization point has not been observed in several measurements of the same area, it is not useful and can therefore be deleted.

A stored localization point is thus a known location of an object that have been observed over time. It also contains the heading (and possible the position) of the robotic work tool 100 when the localization point started to be observed. Possibly also together with the location of the robotic work tool 100 when the localization point stopped to be observed.

After a while, for example 1-2 hours or 1-2 days of operating there will be a huge amount of localization points. There will probably be duplicated or similar localization points and the robotic work tool 100 is thus in some embodiments configured to clean up the localization points and identify objects that can be used for navigation when there is a poor RTK signal.

In this step a map is generated or supplemented with potential features. All or at least some of the localization points are reduced to better represent the feature from different locations and headings. In time the map will updated so that dynamic/movable objects like furniture or ladders will fade out. In some embodiments this can be done by dropping oldest nav points when new localization points are recorded. In some cases, a list of features including about 5000 navigations points would represent a common garden. The basic principle of how to reduce the number of localization points is discussed below.

Firstly, in order to identify features, the navigations points are clustered. A cluster algorithm (such as DBSCAN) can be applied to the localization points. This method will group all navigations points that are close to each other (for example within 0.3 m)

Then each group or cluster is examined. If the group contains many navigations points (> 10) than it will be used as a feature. Depending on how many navigations points that are in that group, the group will in some embodiments get a probability value. Many points gives a high probability and few points gives a lower probability.

Then each localization point in a group is compared to each other. Localization points that have similar approaching angles will be merged together to form a single localization point.

Eventually there will be a map with features. Each feature contains a number of navigations points. If the feature is a tree for example, it would probably have around 24 navigations points depending on the angular resolution one need (in this example an angular resolution of 15 Deg was used (360 Deg / 15 Deg = 24).

Navigations points are thus clustered to form potential features. The navigations points in one cluster/feature are reduced by merging similar once based on its observation parameters (robotic work tool location and heading when the point started to be observed)

As has been discussed in the background section, satellite navigation is not always reliable, and in order to allow successful navigation even in areas where satellite navigation is not reliable, the robotic work tool 100 is configured to determine that the satellite navigation is not reliable (the satellite position is determined to not be reliable), and in response thereto determine a current position of the robotic work tool 100 by receiving sensor readings from the distance sensor 180, process the sensor readings to determine a pose or heading of the robotic work tool 100, possibly sort the list of features based on the determined pose, and find a matching feature in the list of feature and determine the current position based on the matching feature, the heading and a distance to the feature.

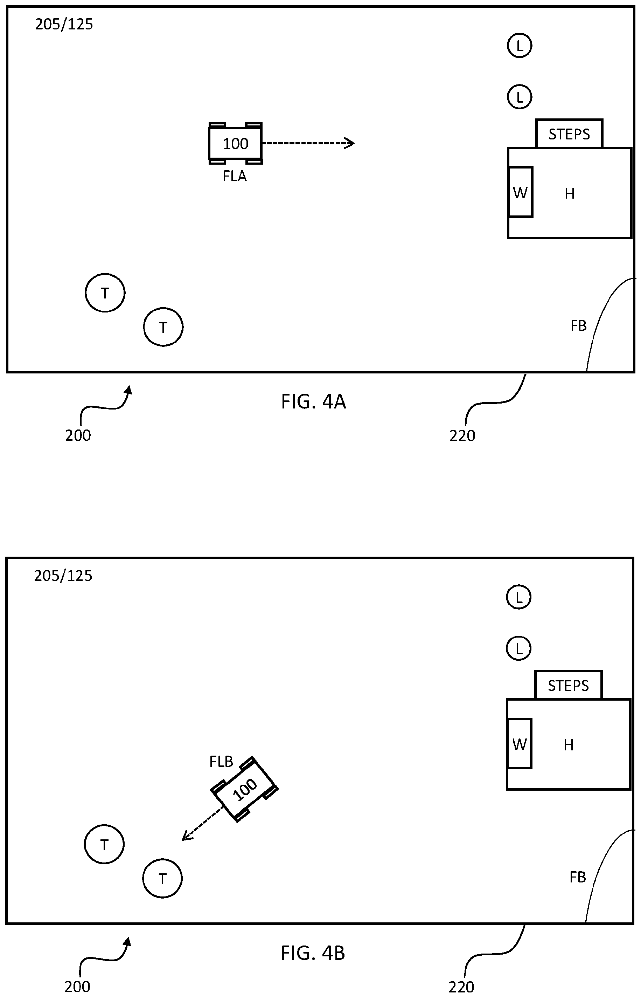

Figure 4A shows a situation where a robotic work tool 100 determines that satellite navigation is not reliable and in turn receives sensor readings from the distance sensor 180 and determines its current position based on the sensor readings. Similarly, Figure 4B shows a second situation where a robotic work tool 100 determines that satellite navigation is not reliable and in turn receives sensor readings from the distance sensor 180 and determines its current position based on the sensor readings.

In figure 4A the pose (and position) is similar to the pose (and position) of the second robotic work tool 100A of figure 3, and the robotic work tool 100 will filter the list of features to a list resembling the list of FLA as discussed in relation to figure 3 being based on the first point cloud PA. The current position will be determined based on the feature list FLA for that pose. Similarly, in figure 4B the pose (and position) is similar to the pose (and position) of the second robotic work tool 100B of figure 3, and the robotic work tool 100 will filter the list of features to a list resembling the list of FLB as discussed in relation to figure 3 being based on the second point cloud PB. The current position will be determined based on the feature list FLB for that pose.

More details on the navigation will be discussed below.

When the robotic work tool 100 works in the operating area it continuously generates the navigations points and stores them while there is a good satellite navigation signal. However if the satellite navigation signal is lost, the robotic work tool 100 switches over to navigate using the prebuilt feature map. From the current or last known position the robotic work tool 'lights up' features from the map. This is done by filtering the feature list of the map. The robotic work tool 100 will only 'light up' features that are expected to be observed from current pose (heading and possibly). This is simply achieved by looking at the observations parameters of at least some localization points in a feature or stored for a feature. The data for a feature may thus be stored for the feature and/or for the individual localization points grouped or clustered for that feature.

The algorithm will pick the best localization point (i.e. the localization point whose observed location and heading is most similar to the current of the robotic work tool) for the feature based on the current pose. This will improve accuracy since the location of the feature slightly differs depending on from were it was observed.

The basic principle is as below. The navigation algorithm works in a similar way as finding localization points previously described. The robotic work tool 100 matches radar points to existing localization points, however these navigations points have not been stored yet they are referred to as Real Time Navigations Points.

When the Real Time Navigations Points have been observed a couple of measurements the robotic work tool 100 tries to match it to features that are active (lightened).

When there is a match (Real Time Navigations Points is close to a Feature). The robotic work tool 100 updates the current position of the robotic work tool 100. The update can be based on matching several features and weightens the probability of each feature to select the best match. A best match algorithm like ICP (iterative closest points) together with a Kalman Filter may be used to do this. Also, parameters like were in the Field of View the object is observed (the direction to the object) may be considered (objects in front of the radar are more trustworthy than objects in the periphery)

In some embodiments, the Real Time Navigations Points can be considered to become Stored Navigations Points and used to update the map. This will eventually expand the map beyond areas without RTK signal.

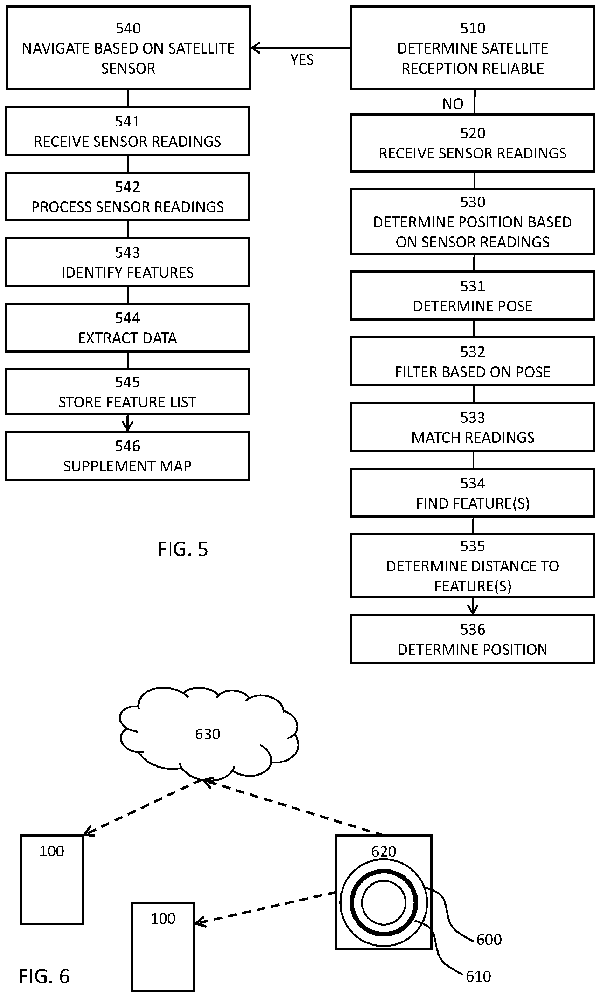

Figure 5 shows a flowchart for a general method according to herein. The method is for use in a robotic work tool as in figure 1 in a manner as discussed above in relation to figures 2, 3, 4A and 4B, namely for use in a robotic work tool system comprising a robotic work tool 100 arranged to operate in an operational area 205.

The robotic work tool, or rather the controller 110 of the robotic work tool 100, determines 510 that satellite navigation is not reliable and in turn receives 520 sensor readings from the distance sensor 180 and determines 530 its current position based on the sensor readings.

A current pose (heading and possibly position) is determined 531 for the robotic work tool 100. This pose can be determined based on the previous reliable satellite position, based on sensor readings 180, and or based on deduced reckoning sensors 185. The list of features is optionally filtered 532 based on the pose. The position of the robotic work tool 100 can be determined as a general position (for example the last known position of the robotic work tool 100) and is used to further filter the feature list. And, the sensor readings are matched 533 against the list of features for finding 534 matching features. A distance to the matched feature is determined 535 based on the sensor readings. Possibly a direction to the matched feature is also determined based on the sensor readings. And the robotic work tool can then determine 536 its current position based on the distance (and possibly direction) to the matched feature.

By finding more than one matching feature, it may suffice knowing the distances to the features as the position can then be determined through for example triangulation.

Also, the previous position (or general position) of the robotic work tool may also not be needed as this only serves to reduce the feature list, and is not essential.

As has been discussed in the above, when the satellite navigation is reliable, the robotic work tool 100 is configured to navigate 540 utilizing satellite reception and then receive 541 the sensor readings and process 542 the sensor readings (remotely/externally or locally/internally) to identify 543 features and extract 544 data on the features and store 545 these in the feature list, thereby generating 546 or supplementing the map 125.

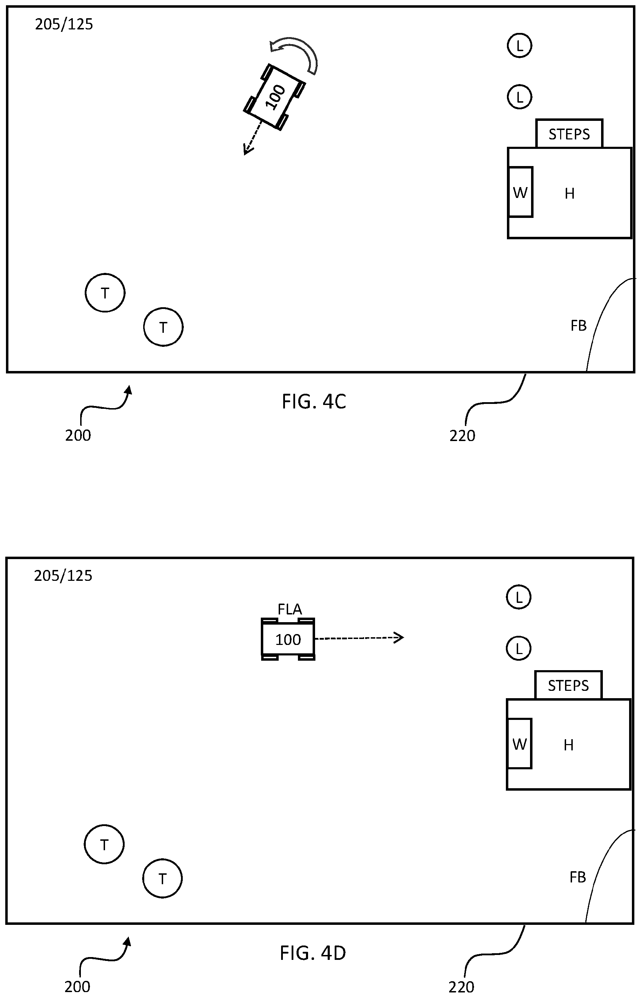

Returning to figures 4A and 4B, the robotic work tool 100 may also be configured to determine its position even when no matching features can be found, for example by rotating and determining a new pose and to see if any features can be found in the new heading. In figure 4C a robotic work tool 100 is in a pose where no features can be observed (assuming that the trees T are for example too far away). The robotic work tool 100 then rotates and receives new sensor readings and tries to find features again. Figure 4D shows how the robotic work tool 100 is able to receive a feature list similar to the feature list for the first robotic work tool 100A in figure 3.

In some embodiments, the robotic work tool 100 is further configured to determine a direction (or angular distance) to rotate based on a position of the robotic work tool 100. The position may be the last known position of the robotic work tool 100. By knowing the heading the features were found in, the robotic work tool 100 can determine how to change a current heading to align withs such headings in order to be able to find the features. In some such embodiments, the robotic work tool 100 also filters the available features based on a position (such as a general position) of the robotic work tool so that the robotic work tool can rotate to a heading where features will be visible from that position. This can be determined based on comparing the positions stored for when a feature was observed, and/or based on the positions of the features.

In some embodiments, the robotic work tool 100 is further configured to determine a distance or even path to travel based on a position of the robotic work tool 100. The position may be the last known position of the robotic work tool 100. The robotic work tool 100 may thus travel - using for example deduced reckoning sensors 185 - to a position where features are more likely to be found. Such a position can be determined as a position where features were previously found. Such a position can also be determined as a position that is in close proximity (i.e. easy to travel to) for the robotic work tool 100. Such positions may be within a predefined distance (5, 10, 15 or 20 meters). Such positions may also or alternatively be on a path with few (or the fewest) turns.

Figure 6 shows a schematic view of a computer-readable medium 600 carrying computer instructions 610 that when loaded into and executed by a controller of a robotic work tool 100, enables the robotic work tool 100 to implement the teachings herein. The computer-readable medium 600 may be tangible such as a hard drive or a flash memory, for example a USB memory stick or a cloud server. Alternatively, the computer-readable medium 600 may be intangible such as a signal carrying the computer instructions enabling the computer instructions to be downloaded through a network connection, such as an internet connection. In the example of figure 6, a computer-readable medium 600 is shown as being a hard drive or computer disc 600 carrying computer-readable computer instructions 610, being inserted in a computer disc reader 620. The computer disc reader 620 may be part of a cloud server 630 - or other server - or the computer disc reader 620 may be connected to a cloud server 630 - or other server. The cloud server 630 may be part of the internet or at least connected to the internet. The cloud server 630 may alternatively be connected through a proprietary or dedicated connection. In one example embodiment, the computer instructions are stored at a remote server 630 and be downloaded to the memory 120 of the robotic work tool 100 for being executed by the controller 110.

The computer disc reader 620 may also or alternatively be connected to (or possibly inserted into) a robotic work tool 100 for transferring the computer-readable computer instructions 610 to a controller of the robotic work tool 100 (presumably via a memory of the robotic work tool 100).

Figure 6 shows both the situation when a robotic work tool 100 receives the computer-readable computer instructions 610 via a server connection and the situation when another robotic work tool 100 receives the computer-readable computer instructions 610 through a wired interface. This enables for computer-readable computer instructions 610 being downloaded into a robotic work tool 100 thereby enabling the robotic work tool 100 to operate according to and implement the invention as disclosed herein.

## Claims

1. A robotic work tool system (200) comprising a robotic work tool (100) arranged to operate in an operational area (205), and the robotic work tool (100) comprising a controller (110), a memory (120), a satellite navigation sensor (175) and one or more additional navigation sensors (180), and
wherein the memory is configured to
store a map of the operational are, said map application including a list of features, and
wherein the controller (110) is configured to
receive (510) sensor input from the satellite navigation sensor (175), the sensor input indicating a satellite position for the robotic work tool (100),
determine (520) if the satellite position is a reliably determined, and if not so, determine a current position of the robotic work tool (100) by
receiving sensor readings from the distance sensor (180),
finding a matching feature in the list of features, the matching feature having a stored position,
determine a distance to the feature and
determining the current position based on the position of the matching feature and a distance to the feature.

2. The robotic work tool system (200) according to claim 1, wherein the controller (110) is further configured to
determine a pose of the robotic work tool (100) and filter the list of features based on the determined pose.

3. The robotic work tool system (200) according to claim 2, wherein the pose includes a position of the robotic work tool 100.

4. The robotic work tool system (200) according to any preceding claim, wherein the controller (110) is further configured to
determine the distance to the feature based on the sensor readings.

5. The robotic work tool system (200) according to any preceding claim, wherein the controller (110) is further configured to
determine a direction to the matched feature based on the sensor readings and determine the current position based on the distance and direction to the matched feature.

6. The robotic work tool system (200) according to any preceding claim, wherein the controller (110) is further configured to
find more than one matching feature and
determine the current position based on the distances to the more than one matching features.

7. The robotic work tool system (200) according to any preceding claim, wherein the controller (110) is further configured to, when satellite navigation is reliable,
receive (541) sensor readings from the distance sensor (180)
process (542) the sensor readings to identify (543) features,
extract (544) data on the features and
store (545) these in the feature list.

8. The robotic work tool system (200) according to any preceding claim, wherein the controller (110) is further configured to
process (542) the sensor readings remotely in a server.

9. The robotic work tool system (200) according to any preceding claim, wherein the controller (110) is further configured to
process (542) the sensor readings remotely in the controller (110).

10. The robotic work tool system (200) according to any preceding claim, wherein the controller (110) is further configured to
determine that no matching features can be found and in response thereto rotate to a new pose,
receive second sensor readings and
determine if any features can be found in the new pose.

11. The robotic work tool system (200) according to claim 10, wherein the controller (110) is further configured to
determine a direction to rotate based on a position of the robotic work tool 100.

12. The robotic work tool system (200) according to claim 10 or 11, wherein the controller (110) is further configured to
determine a distance to travel based on a position of the robotic work tool 100.

13. The robotic work tool system (200) according to any preceding claim, wherein the robotic work tool (100) is a robotic lawnmower (100).

14. A method for use in a robotic work tool system (200) comprising a robotic work tool (100) arranged to operate in an operational area (205), and the robotic work tool (100) comprising a satellite navigation sensor (175) and one or more additional navigation sensors (180), and
wherein the memory is configured to
store a map of the operational are, said map application including a list of features, and
wherein the method comprises
receiving (510) sensor input from the satellite navigation sensor (175), the sensor input indicating a satellite position for the robotic work tool (100),
determining (520) if the satellite position is a reliably determined, and if not so, determining a current position of the robotic work tool (100) by
receiving sensor readings from the distance sensor (180),
finding a matching feature in the list of features, the matching feature having a stored position,
determining a distance to the feature and
determining the current position based on the position of the matching feature and a distance to the feature.

15. A computer-readable medium (600) carrying computer instructions (610) that when loaded into and executed by a controller (110) of a robotic work tool (100) enables the robotic work tool (100) to implement the method according to claim 14.
